(19) Europäisches Patentamt / European Patent Office / Office européen des brevets

(11) **EP 1 834 503 B1**

(12) **EUROPÄISCHE PATENTSCHRIFT**

(45) Veröffentlichungstag und Bekanntmachung des Hinweises auf die Patenterteilung:
**30.09.2015   Patentblatt 2015/40**

(21) Anmeldenummer: **05823939.3**

(22) Anmeldetag: **22.12.2005**

(51) Int Cl.:
*H04Q 11/00* (2006.01)     *H04L 12/705* (2013.01)

(86) Internationale Anmeldenummer:
**PCT/EP2005/013917**

(87) Internationale Veröffentlichungsnummer:
**WO 2006/072406 (13.07.2006 Gazette 2006/28)**

(54) **VERFAHREN ZUR ÜBERTRAGUNG VON DATENPAKETEN MITTELS EINES OPTISCHEN BURST-SWITCHING-NETZWERKS UND NETZKNOTEN FÜR EIN OPTISCHES BURST-SWITCHING-NETZWERK**

METHOD FOR THE TRANSMISSION OF DATA PACKETS BY MEANS OF AN OPTICAL BURST SWITCHING NETWORK AND NETWORK NODES FOR AN OPTICAL BURST SWITCHING NETWORK

PROCEDE DE TRANSMISSION DE PAQUETS DE DONNEES AU MOYEN D'UN RESEAU A COMMUTATION OPTIQUE PAR RAFALES ET NOEUDS DE RESEAU POUR UN RESEAU A COMMUTATION OPTIQUE PAR RAFALES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.12.2004   EP 04031049**

(43) Veröffentlichungstag der Anmeldung:
**19.09.2007   Patentblatt 2007/38**

(73) Patentinhaber: **Xieon Networks S.à r.l.**
**2633 Senningerberg (LU)**

(72) Erfinder:
- **FREIRE, Mario**
  **P-6200-330 Covilha (PT)**
- **GARCIA, Nuno**
  **P-6200-502 Covilha (PT)**
- **MONTEIRO, Paulo**
  **P-3830-209 Ilhavo (PT)**
- **RAMALHO RIBEIRO DOS SANTOS, José, Miguel**
  **P-1750-430 Lisboa (PT)**

(74) Vertreter: **Lucke, Andreas et al**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
**WO-A-2004/107798     US-A1- 2003 185 153**

- **XIONG Y ET AL: "CONTROL ARCHITECTURE IN OPTICAL BURST-SWITCHED WDM NETWORKS" IEEE JOURNAL ON SELECTED AREAS IN COMMUNICATIONS, IEEE SERVICE CENTER, PISCATAWAY, NJ, US, Bd. 18, Nr. 10, Oktober 2000 (2000-10), Seiten 1838-1851, XP000976892 ISSN: 0733-8716**
- **BALDINE I ET AL: "JUMPSTART: A JUST-IN-TIME SIGNALING ARCHITECTURE FOR WDM BURST-SWITCHED NETWORKS" IEEE COMMUNICATIONS MAGAZINE, IEEE SERVICE CENTER, NEW YORK, NY, US, Bd. 40, Nr. 2, Februar 2002 (2002-02), Seiten 82-89, XP001125422 ISSN: 0163-6804**

**Beschreibung**

Verfahren zur Übertragung von Datenpaketen mittels eines optischen Burst-Switching-Netzwerks und Netzknoten für ein optisches Burst-Switching-Netzwerk.

Die Erfindung betrifft ein Verfahren-nach dem Oberbegriff des Patentanspruchs 1 und einen Netzknoten für ein optisches Burst-Switching-Netzwerk.

Datenpakete sollen in Zukunft über optische Burst-Switching-Netzwerke / optical burst switching network, kurz OBS-Netze, übertragen werden. Diese OBS-Netze weisen mehrere Netzknoten bzw. Netzelemente auf, die durch Lichtwellenleiter miteinander verbunden sind. Dabei werden mehrere Datenpakete, wie IP Pakete, in einem Eingangsnetzknoten des OBS-Netzes zu einem so genannten Burst aggregiert bzw. angesammelt, wobei der Burst dann über das optische Burst-Switching-Netzwerk zu einem Zielnetzknoten des optischen Burst-Switching-Netzwerkes übertragen wird. Dort wird der Burst wieder in seine Datenpakete zerlegt, die dann weiter übertragen werden. Jedem Burst wird ein Header zugeordnet, der vor der Übertragung des Burst zur Konfigurierung der Netzknoten des Netzes für die Übertragung des Burst in das optische Burst-Switching-Netzwerk gesendet wird. Dabei wird der Header in jedem Netzknoten auf dem geplanten Weg des Burstes zu seinem Zielnetzknoten empfangen, optisch-elektrisch gewandelt, ausgewertet, elektrisch-optisch gewandelt und zum nächsten Netzknoten auf dem Weg zum Zielnetzknoten gesendet. Nach der Auswertung des Header im Netzknoten erfolgt eine Reservierung der Übertragungskapazität des Netzknoten für die Übertragung des durch den Header angekündigten Burst. Unter anderem werden Übertragungswege im Netzknoten für die reibungslose Übertragung bzw. Durchleitung des Burst eingerichtet bzw. zeitlich vorreserviert, damit zum Zeitpunkt der Burstübertragung die Übertragungswege im Netzknoten geschalten sind.

Nach der Aussendung des Header wird abhängig vom so genannten Reservierungsverfahren der Burst ausgesendet und übertragen. Für die Reservierung in den Netzknoten durch einen Header für den Burst gibt es verschiedene Reservierungsverfahren. Man unterscheidet dabei so genannte One-Way- und Two-Way-Reservierungsprotokolle.

Bei One-Way-Reservierungsprotokollen wird im Eingangsnetzknoten der Header in das OBS-Netz gesendet, eine Zeitspanne gewartet und anschließend der Burst hinterher gesendet. Dies erfolgt in der Erwartung, dass in der Zeitspanne durch den Header die Netzknoten auf dem Weg zum Zielnetzknoten konfiguriert werden und der Burst anschließend fehlerfrei durch das OBS-Netz übertragen wird.

Bei Two-Way-Reservierungsprotokollen wird im Eingangsnetzknoten ein erster Header in das OBS-Netz gesendet, der die Netzknoten konfiguriert und nach erfolgreicher Konfiguration in der Regel aller Netzknoten auf dem Weg zum Zielnetzknoten wird eine zweite Nachricht bzw. ein zweiter Header zurück an den Eingangsnetzknoten gesendet, mit der Information, dass die Reservierung durch den ersten Header erfolgreich war. Erst dann wird der Burst des ersten Headers in das OBS-Netz gesendet und über die vorkonfigurierten Netzknoten erfolgreich zum Zielnetzknoten übertragen.

Jedes der beiden Arten von Reservierungsverfahren hat Vor-und Nachteile. Die erste Art Reservierungsverfahren, die One-Way-Reservierungsprotokolle sind schneller bei der Übertragung von Bursts, da ein Warten auf die Bestätigung der Reservierung entfällt. Allerdings besteht bei gleichzeitigen Reservierungswünschen durch zwei oder mehr Header die Gefahr von Blockierungen und Burst-Verlusten. Two-Way-Reservierungsprotokolle sind sicherer in der Übertragung, da ein Burst nur ausgesendet wird, wenn ein konfigurierter Pfad in den Netzknoten vorhanden ist. Allerdings ist die Übertragung dahingehend langsamer, dass eine längere Zeit vergeht, bis ein Burst ausgesendet wird. Zudem ist das Verfahren komplexer.

Die One-Way-Reservierung wird auch als Tell-and-Go-Reservation, kurz TAG-OBS bezeichnet. Die Two-Way-Reservierung wird auch als Tell and Wait, kurz TAW-OBS bezeichnet.

Die Internationale Anmeldung WO2004/107798 veröffentlicht ein OBS-Netzsystem, umfassend: einen eine Signalkoppeleinrichtung einschliessenden optischen Signalbus, eine Vielzahl von Netzadaptern, die in optischer Kommunikation stehen mit dem optischen Signalbus und in Netzkommunikation mit Netzendgeräteeinrichtungen, wobei jeweilige Netzadapter an Endgeräteausrüstung gekoppelt sind und einen Empfänger einschiessen, einen Sender und eine Steuerlogik, die eine bidirektionale Übertragung von Datensignalen als Bursts bzw. Datenschwall zwischen der Endgeräteausrüstung und dem Netzsystem ermöglichen und einen optischen Bus-Controller in optischer Kommunikation mit dem optischen Signalbus zum Verarbeiten von von dem optischen Signalbus empfangenen Signalen zum Einrichten von Signalkommunikationen zwischen einem angeforderten Netzadapter und einem anfordernden Netzadapter basierend auf einer durch den anfordernden optischen Adapter veranlassten Anforderung.

Aufgabe der vorliegenden Erfindung ist es, die Übertragung von Datenpaketen in einem optischen Burst-Switching-Netzwerk zu verbessern.

Diese Aufgabe wird durch ein Verfahren mit den Merkmalen des Patentanspruchs 1 und einem Netzknoten mit den Merkmalen des Patentanspruchs 5 gelöst.

Der Vorteil des Verfahrens besteht darin, dass durch die Verwendung eines gemeinsamen Steuerungskanals für Header eine schnellere Verteilung der Header im gesamten Netzwerk und eine quasi parallele Verarbeitung der Header in den Netzknoten erzielt wird, so dass eine schnellere Reservierung der Übertragungswege in den Netzknoten für die Bursts erzielt wird. Dabei werden durch den schleifenfreien gemeinsamen Steuerungskanal die Header quasi parallel zu den Netzknoten übertragen bzw. verteilt, ohne jeweils im Netzknoten optisch-elektrisch gewandelt, ausgewertet und elektrisch-optisch gewandelt zu werden.

Vorteilhafte Ausgestaltungen der Erfindung sind in den Unteransprüchen angegeben.

In einer Ausgestaltung der Erfindung wird das Spanning-Tree-Verfahren bzw. Spanning-Tree-Protokoll für die Einrichtung eines schleifenfreien gemeinsamen Steuerungskanals verwendet. Dies hat den Vorteil, dass ein standardisiertes und einfaches Verfahren für die Einrichtung eines schleifenfreien gemeinsamen Steuerungskanals verwendet wird.

In einer Ausgestaltung der Erfindung wird ein optischer Wellenlängenmultiplex-Kanal ausschließlich als gemeinsamer Steuerungskanal für die Übertragung der Header verwendet. Dies hat den besonderen Vorteil, dass eine einfache Realisierung für den gemeinsamen Steuerungskanal gegeben ist.

Ein Ausführungsbeispiel der Erfindung wird im Folgenden anhand der Zeichnung näher erläutert.

Dabei zeigt

Figur 1    ein Diagramm für den Ablauf der Reservierung in einem OBS-Netz gemäß dem Stand der Technik.

Figur 2    ein Diagramm für den erfindungsgemäßen Ablauf der Reservierung in einem OBS-Netz.

Figur 3    ein Schema für einen erfindungsgemäßen Netzknoten.

Figur 4    ein weiteres Schema für einen erfindungsgemäßen Netzknoten.

Figur 5    ein Schema eines OBS-Netzes.

Figur 6    das OBS Netz nach Figur 5 mit einem ersten schleifenfreien Steuerungskanal.

Figur 7    das OBS Netz nach Figur 5 mit einem zweiten schleifenfreien Steuerungskanal.

Figur 8    eine Verschaltung von Kanälen für einen schleifenfreien Steuerungskanal gemäß Figur 7 unter Verwendung von Netzelementen nach Figur 4.

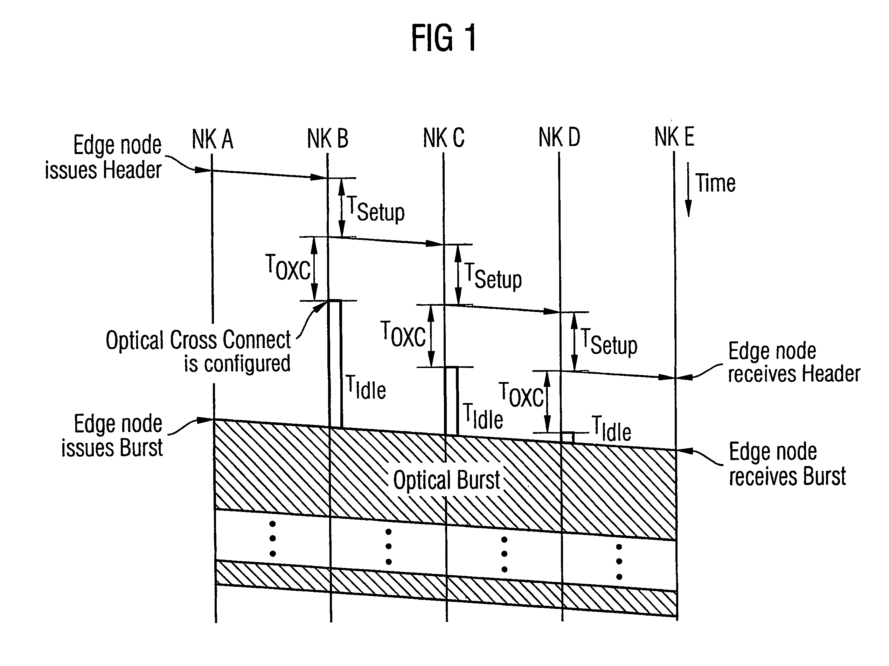

Figur 1 zeigt ein Diagramm über den zeitlichen Ablauf der Reservierung in einem OBS-Netz gemäß dem Stand der Technik. Vertikale Linien symbolisieren jeweils einen Netzknoten NK A, NK B, NK C, NK D, NK E, wobei ein Burst, bestehend aus mehreren Datenpaketen, wie IP Paketen, vom Eingangs- oder Edge-Netzknoten NK A des OBS-Netzes über die Netzknoten NK B, NK C, NK D zum Ausgangs-, Ziel- bzw. Edge-Netzknoten NK E des OBS-Netzes übertragen werden soll. Der zeitliche Ablauf ist in Figur 1 von oben nach unten zu lesen, wie durch den Pfeil Time angedeutet. Im Eingangsnetzknoten NK A werden Datenpakete zu einem Burst aggregiert. Ist die Aggregierung des Burst abgeschlossen, so dass dieser zum Zielnetzknoten gesendet werden kann, wird ein Header bzw. ein so genanntes Control-Paket erzeugt, mit Hilfe dessen die Reservierung des Pfades für den Burst in den Netzknoten des OBS-Netzes durchgeführt werden soll. Dazu enthält der Header Informationen, wie die Burstlänge und den Absendezeitpunkt des Burst. Der Header wird vom Netzknoten NK A zum Netzknoten NK B übertragen, was durch einen horizontalen Pfeil zwischen den vertikalen Linien für die Netzknoten NK A und NK B verdeutlicht wird. Gemäß dem Stand der Technik wird der Header in Netzknoten B optisch-elektrisch gewandelt, ausgewertet, woraufhin eine Reservierung des Übertragungsweges für den Burst im Netzknoten NK B durchgeführt wird, elektrisch-optisch gewandelt und zum nächsten Netzknoten NK C auf dem Weg zum Ziel-Netzknoten (NK E) übertragen.

Die Zeit für die Verarbeitung des Headers in einem Netzknoten, d.h. die optisch-elektrische Wandlung, Auswertung, elektrisch-optische Wandlung und Aussendung des Headers, ist mit $T_{Setup}$ gekennzeichnet. Die Zeit für die Konfigurierung des Netzknoten für die Übertragung bzw. Durchleitung eines Burst durch den Netzknoten ist mit $T_{oxc}$ gekennzeichnet. In Netzknoten NK C wird der Header wiederum optisch-elektrisch gewandelt, ausgewertet, woraufhin eine Reservierung durchgeführt wird, elektrisch-optisch gewandelt und zum nächsten Netzknoten NK D auf dem Weg zum Ziel-Netzknoten (NK E) übertragen.

Im Netzknoten NK D wird wiederum diese Verarbeitung des Headers durchgeführt und dieser zum Ziel-Netzknoten NK E übertragen.

Im Ziel-Netzknoten NK E ist häufig keine weitere Konfiguration für den Empfang eines Burst notwendig, so dass lediglich, wenn überhaupt, der Header ausgewertet wird.

Daraus ergibt sich für eine Übertragungsstrecke, wobei der Header in n Netzknoten verarbeitet werden muss, eine Übertragungszeit bis zum Ziel-Netzknoten für den Header mit:

$$T_H = n \times T_{Setup}$$

In der Regel ist die Zeit für die Konfiguration eines Netzknoten $T_{oxc}$ etwas größer als die Verarbeitungszeit eines Header $T_{Setup}$. Bei derzeitigen Realisierungen liegt die Verarbeitungszeit $T_{Setup}$ im zweistelligen Mikrosekundenbereich und die Konfigurationszeit $T_{oxc}$ im einstelligen Millisekundenbereich.

Folglich ist gemäß Figur 1 für den frühsten Zeitpunkt der Absendung eines Burst zu der Übertragungszeit $T_H$

des Headers die Konfigurationszeit zumindest im vorletzten Netzknoten (NK D) hinzuzuziehen um eine Übertragung von Netzknoten NK A zum Netzknoten NK E zu ermöglichen.

Somit ergibt sich für die Zeit bis zur Absendung / Übertragung des Burst:

$$T_B \geq T_H + T_{OXC} = n \times T_{Setup} + T_{OXC}$$

Die zeitliche Übertragung des Burst durch das OBS Netz ist in Figur 1 durch den horizontalen Block Optical Burst angedeutet.

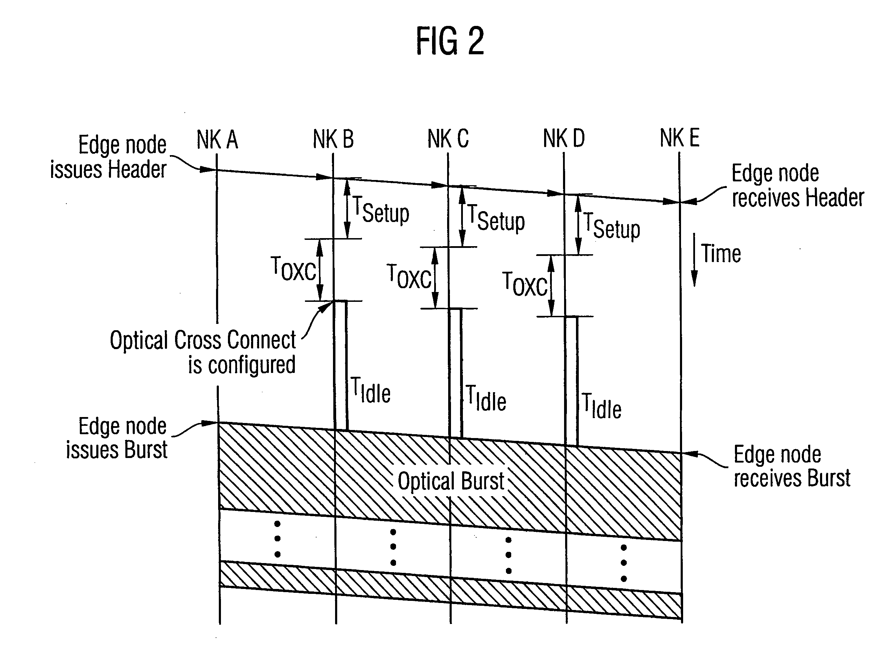

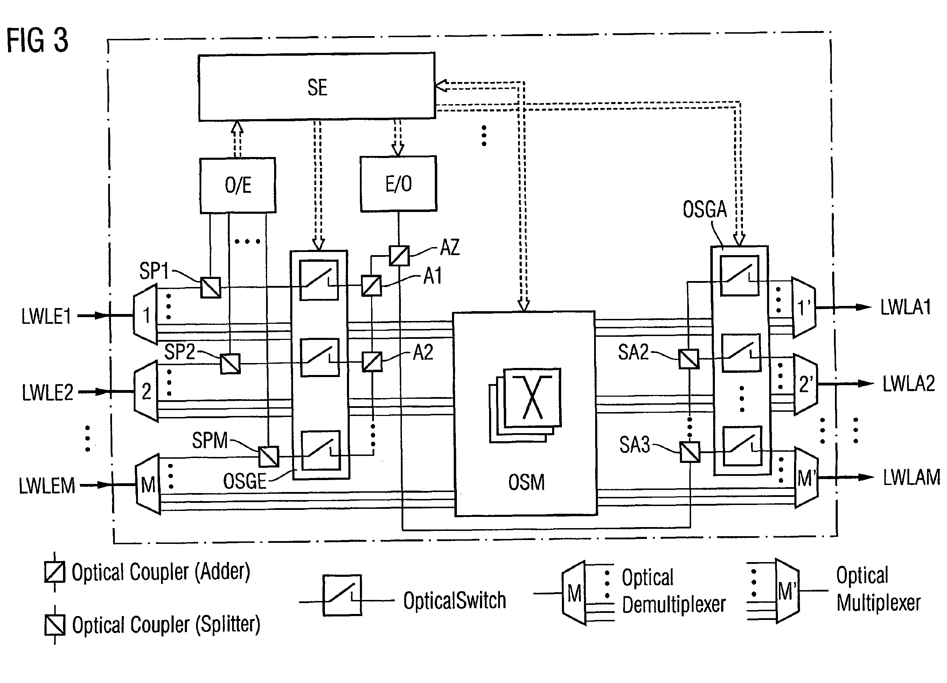

Figur 2 zeigt ein Diagramm gemäß Figur 1, mit dem Unterschied, dass erfindungsgemäß die Header über einen schleifenfreien gemeinsamen Steuerungskanal quasi parallel zu den Netzknoten des OBS-Netzes übertragen werden. Im Beispiel gelangt der Header ohne eine zwischenzeitliche Verarbeitung, d.h. ohne zwischenzeitliche optisch-elektrische Wandlung, Auswertung, elektrisch-optischer Wandlung, nacheinander zu allen Netzknoten NK B, NK C, NK D, NK E, quasi in einem "Drop and Continue" Modus. D.h. ein vom Netzknoten empfangener Header wird einerseits direkt wieder ausgesendet und andererseits im Netzknoten verarbeitet. Die Verarbeitung schließt sich also quasi parallel an die Wiederaussendung des Header an. Somit ergibt sich durch die Verbreitung des Headers über einen gemeinsamen Steuerungskanal eine Zeiteinsparung bis zur Aussendung des Burst. Die Geschwindigkeit des Headers über den Steuerungskanal ist vernachlässigbar klein gegenüber der Verarbeitungszeit $T_{Setup}$ und der Konfigurationszeit $T_{oxc}$ in einem Netzknoten. Gemäß Figur 3 ergibt sich somit, dass die Zeit bis zur Aussendung eines Burst (nach Aussendung des Header) nur etwas größer als die Summe aus Verarbeitungszeit $T_{Se}$-tup und der Konfigurationszeit $T_{oxc}$ zu sein braucht:

$$T_B > T_{Setup} + T_{OXC}$$

Somit ist eine schnellere Aussendung des Burst beim erfindungsgemäßen Verfahren möglich.

Der gemeinsame Steuerungskanal für die Header muss schleifenfrei sein, damit Header im OBS-Netz nicht kreisen. Dazu muss beispielsweise eine Baumstruktur für die Übertragung der Header über den gemeinsamen Steuerungskanal eingerichtet werden. Dies kann bspw. mit einen Spanning Tree Algorithmus erfolgen, bspw. bei Inbetriebnahme bzw. Installierung des OBS-Netzes.

Für den gemeinsamen Steuerungskanal kann beispielsweise ein optischer Wellenlängenmultiplex-Kanal verwendet werden. Die Bursts werden über die verbleibenden Wellenlängenmultiplex-Kanäle übertragen.

Der Ablauf der Reservierung wurde an Hand einer One-Way bzw. Tell and Go / TAG Reservierung erläutert. In analoger Weise kann die Erfindung auch für Two-Way bzw. Tell and Wait / TAW Reservierungen oder andere Reservierungen verwendet werden.

Durch den gemeinsamen Steuerungskanal kann ebenso eine andere Art der Realisierung der Übertragung und Reservierung verwirklicht werden. Beispielsweise können von jedem Netzknoten Header bzw. Kontrollpakete über den Status bzw. mit Informationen des Netzknoten ausgesendet werden, die über den gemeinsamen Steuerungskanal quasi parallel von allen anderen Netzknoten empfangen werden. Somit erhält und hat jeder Netzknoten Informationen über den Status der anderen Netzknoten, so dass im einzelnen Netzknoten bessere Entscheidungen über die Reservierung und den Burst-Verkehr getroffen werden können. So könnten beispielsweise Burst ohne Header in das Netz gesendet werden, vorausgesetzt, die entsprechenden Wege sind in den Netzknoten konfiguriert und verfügbar, was durch entsprechende Statuspakete der jeweiligen Netzknoten über den gemeinsamen Steuerungskanal "propagiert" werden kann. Dadurch lässt sich ein höherer Durchsatz von Bursts im OBS-Netz erzielen.

Ebenso könnte ein Netznoten im Falle einer Störung negative Bestätigungsnachrichten aussenden, die über den gemeinsamen Steuerungskanal von den anderen Netzknoten empfangen werden, so dass die Aussendung eines Burst verzögert wird oder der Burst auf andere Wege übertragen bzw. "umgeroutet" wird.

Figur 3 zeigt einen Netzknoten, umfassend mehrere Eingangslichtwellenleiter LWLE1, LWLE2, ..., LWLEM, die netzknotenseitig jeweils mit einem eingangsseitigen optischen Demultiplexer 1, 2, ..., M verbunden sind, die jeweils einerseits einen optischen Wellenlängemultiplex-Kanal, der für den gemeinsamen Steuerungskanal vorgesehen ist, auskoppeln und andererseits die weiteren optischen Wellenlängenmultiplex-Kanäle für die Bursts auskoppeln und einem optischen Koppelfeld OSM zuführen. Das Koppelfeld OSM führt eine Durchschaltung eines Übertragungsweges für Burst(s) von einem Wellenlängenmultiplex-Kanals eines eingangsseitigen Lichtwellenleiters zu einem Wellenlängenmultiplex-Kanals eines ausgangsseitigen Lichtwellenleiters durch. Dieses Koppelfeld OSM ist andererseits mit ausgangsseitigen Multiplexern 1', 2', ..., M' verbunden, die die optischen Wellenlängenmultiplex-Kanäle, über die die Bursts übertragen werden und den optischen Wellenlängenmultiplex-Kanal für den gemeinsamen Steuerungskanal ausgangsseitig jeweils zu einem optischen Wellenlängenmultiplexsignal zusammenfassen, so dass über den an einem ausgangsseitigen Multiplexer 1', 2', ..., M' angeschlossenen ausgangsseitigen Lichtwellenleiter LWLA1, LWLA2, ..., LWLAM jeweils ein Wellenlängenmultiplexsignal abgegeben wird.

Der jeweils vom eingangsseitigen optischen Demultiplexer 1, 2, ..., M ausgekoppelte optische Wellenlängemultiplex-Kanal für den gemeinsamen Steuerungskanal wird jeweils einem optischen Koppler bzw. Splitter SP1, SP2, ..., SPM zugeführt, der diesen aufteilt und zum einen einer Steuerung des Netzknotens und zum anderen einer eingangsseitigen optischen Schalteinrichtung OSGE für die Verschaltung des gemeinsamen Steuerungskanals zuführt. Die optische Schalteinrichtung OSGE kann auch als Kombination mehrerer Einzelschalter ausgeführt sein, wobei ein Einzelschalter jeweils den Steuerungskanal eines Lichtwellenleiters schaltet.

Die Steuerung weist einen optisch-elektrischen Umsetzer O/E, eine Steuereinrichtung SE, die die Header auswertet und gegebenenfalls neue Header oder Kontrollpakete erzeugt, und einen elektrisch-optischen Umsetzer E/O auf, so dass ausgewertete Header oder neue Header zur Aussendung abgegeben werden können.

Die Ausgänge der optischen Schalteinrichtung OSGE bzw. der optischen Einzelschalter sind ausgangsseitig mit optischen Kopplern bzw. Combiner/Adder A1, A2, verbunden, die die durchgeschalteten optischen Steuerungskanäle der Lichtwellenleiter zusammenführen. Diese zusammengeführten Steuerungskanäle werden einem weiteren optischen Koppler bzw. Combiner/Adder AZ zugeführt der andererseits mit der Steuerung verbunden ist, so dass vom elektrisch-optischen Umsetzer abgegebene Header den zusammengeführten Steuerungskanälen zugeführt werden. Der Ausgang des optischen Kopplers AZ ist mit einem ausgangsseitigen optischen Splitter oder einer Kombination aus ausgangsseitigen optischen Splittern SA2, SA3 verbunden, die den zusammengeführten Steuerungskanal aufteilen und jeweils über ausgangsseitige Einzelschalter oder einer ausgangsseitigen optischen Schalteinrichtung OSGA den ausgangsseitigen Multiplexern 1', 2', M' zuführen, die die optischen Wellenlängenmultiplex-Kanäle, über die die Bursts übertragen werden und den jeweiligen optischen Wellenlängenmultiplex-Kanal für den gemeinsamen Steuerungskanal zu einem optischen Wellenlängenmultiplexsignal zusammenfassen und über die angeschlossenen ausgangsseitigen Lichtwellenleiter LWLA1, LWLA2, ..., LWLAM abgegeben.

Mit dieser Struktur eines Netzknoten, können empfangene Header auf einem gemeinsamen Steuerungskanal einerseits direkt wieder weiterübertragen/ausgesendet werden und andererseits der Steuerung des Netzknoten zugeführt werden. Die Steuerung des Netzknoten ist mit den eingangs- und ausgangsseitigen optischen Schalteinrichtungen OSGE, OSGA und dem optischen Koppelfeld OSM verbunden, so dass diese gesteuert werden können.

Die eingangs- und ausgangsseitigen optischen Schalteinrichtungen OSGE, OSGA dienen zur Herstellung und Schaltung eines schleifenfreien gemeinsamen Steuerungskanals. Beispielsweise soll zur Vermeidung einer Schleife von einem eingangsseitigen Lichtwellenleiter keine Information empfangenen werden oder es soll auf einem ausgangsseitigen Lichtwellenleiter keine Information ausgesendet werden. Dies wird durch entsprechende Schaltung der Schalteinrichtungen oder Einzelschalter erzielt, so dass der Kanal des betreffenden Lichtwellenleiters nicht verschalten wird.

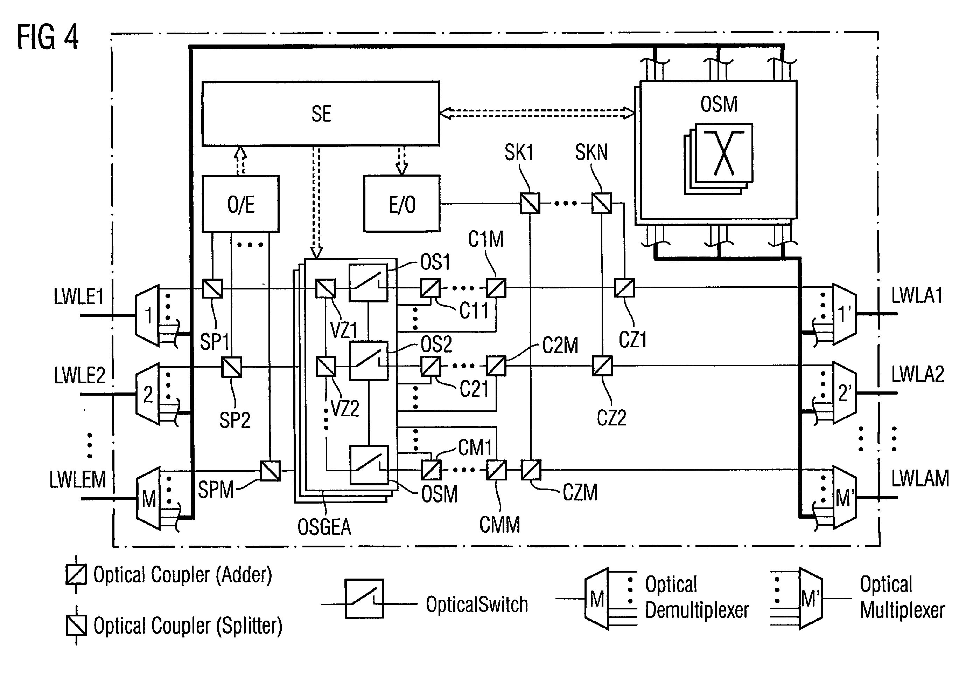

Figur 4 zeigt eine weitere Ausgestaltung eines Netzknoten zur Realisierung des gemeinsamen Steuerungskanals gemäß Figur 3, mit dem Unterschied, das eine Gruppe bzw. ein Array oder Stack von optischen Schalteinrichtungen OSGEA verwendet wird. Hierbei ist der eingangsseitige Lichtwellenleiter LWLE1, LWLE2, ... LWLEM mit dem Demultiplexer 1, 2, ..., M verbunden, der den für den gemeinsamer Steuerungskanal vorgesehenen Wellenlängenmultiplex-Kanal auskoppelt und dem optischen Splitter SP1, SP2, ..., SPM zuführt, der einerseits mit dem optisch-elektrischen Umsetzer O/E verbunden ist, der wiederum mit der Steuereinrichtung SE des Netzknoten verbunden ist, und andererseits mit einer optischen Schalteinrichtung OSGEA bzw. Gruppe von optischen Schalteinrichtungen OSGEA verbunden ist, dessen Ausgang mit einem optischen Combiner CZ1, CZ2, ... CZM verbunden ist, der andererseits mit dem elektrisch-optischen Umsetzer E/O verbunden ist, der mit der Steuerung SE verbunden ist, und der Ausgang des optischen Combiners CZ1, CZ2, ... CZM mit dem Multiplexer 1', 2', ..., M' verbunden ist, der den gemeinsamen Steuerungskanal in einen Kanal des ausgangsseitigen Lichtwellenleiter LWLA1, LWLA2, ..., LWLAM einkoppelt.

Der vom jeweiligen Demultiplexer 1, 2, ..., M ausgekoppelte jeweilige gemeinsame Steuerungskanal wird über den jeweiligen Splitter SP1, SP2, ... oder SPM jeweils der optischen Schalteinrichtung zugeführt, wobei für jeden eingangsseitigen / empfangenen gemeinsamen Steuerungskanal eine optische Schalteinrichtung vorgesehen ist. Die Summe der für jeden eingangsseitigen gemeinsamen Steuerungskanal vorgesehenen optischen Schalteinrichtungen bildet die Gruppe bzw. das Array oder den Stack von optischen Schalteinrichtungen OSGEA. Eine optische Schalteinrichtung ist derart ausgestaltet, dass der zugeführte gemeinsame Steuerungskanal entsprecht der Anzahl der ausgangsseitigen / abzugebenden gemeinsame Steuerungskanäle aufgeteilt wird, gemäß Figur 4 mit optischen Verzweigern / Splittern VZ1, VZ2, ... und die aufgezweigten gemeinsamen Steuerungskanäle jeweils einem Schalter OS1, OS2, ..., OSM zugeführt werden, die diese je nach Schaltzustand an den Ausgängen abgeben. Jeweils ein Ausgang von jeder Schalteinrichtung der Gruppe wird mittels optischer Combiner bzw. Adder C11, ..., C1M, C21, ..., C2M, ..., CM1, ..., CMM zusammengefasst, so dass für jeden abgehenden Lichtwellenleiter ein zuzuführender gemeinsamer Steuerungskanal zur Verfügung steht. Diesem wird jeweils über weitere Combiner / Adder CZ1, CZ2, ..., CZM ein vom elektrischen-optischen Umsetzer E/O abzugebender Header / Signal zugeführt werden, dass vorher über optische Splitter oder Sternkoppler SK1, ... SKN den Combinern / Adder CZ1, CZ2, ..., CZM zugeführt wird.

Ein abgehender gemeinsamer Steuerungskanal wird wieder mittels Multiplexern 1', 2', ..., M' in den entsprechenden Lichtwellenleiter eingekoppelt.

Wesentlich ist, dass jeweils von einem eingangsseitigen Lichtwellenleiter der Kanal für den gemeinsamen Steuerungskanal gemäß der Anzahl der abgehenden Kanäle aufgeteilt wird, jeder aufgeteilte Kanal mittels optischer Schalter OS1, OS2, ..., OSM schaltbar ist, dies für jeden eingangsseitigen Kanal durchgeführt wird, jeweils ein aufgeteilter Kanal eines eingangsseitigen Kanals mit jeweils einen aufgeteilten Kanal eines anderen eingangsseitigen Kanals ausgangsseitig mittels Combiner C11, ..., C1M, C21, ..., C2M, ..., CM1, ..., CMM wieder zusammengefasst wird, wobei diese Zusammenfassung für jeden eingangsseitigen Kanal erfolgt, so dass gemäß der Anzahl der abgehenden Kanäle auf jeden abgehenden Kanal die Header bzw. Kontrollpakete der eingangsseitigen Kanäle zur Verfügung stehen. Dies wird durch die Gruppe von optischen Schalteinrichtung OSGEA gemäß Figur 4 erzielt. Diese können, wie bereits erwähnt, auch als Einzelschalter oder anders geartete Gruppen von optischen Schaltern realisiert werden. Den ausgangseitigen Kanälen werden jeweils mittels Combinern CZ1, CZ2, ..., CZM Header bzw. Kontrollpakete von der Steuerung des Netzknoten zugeführt.

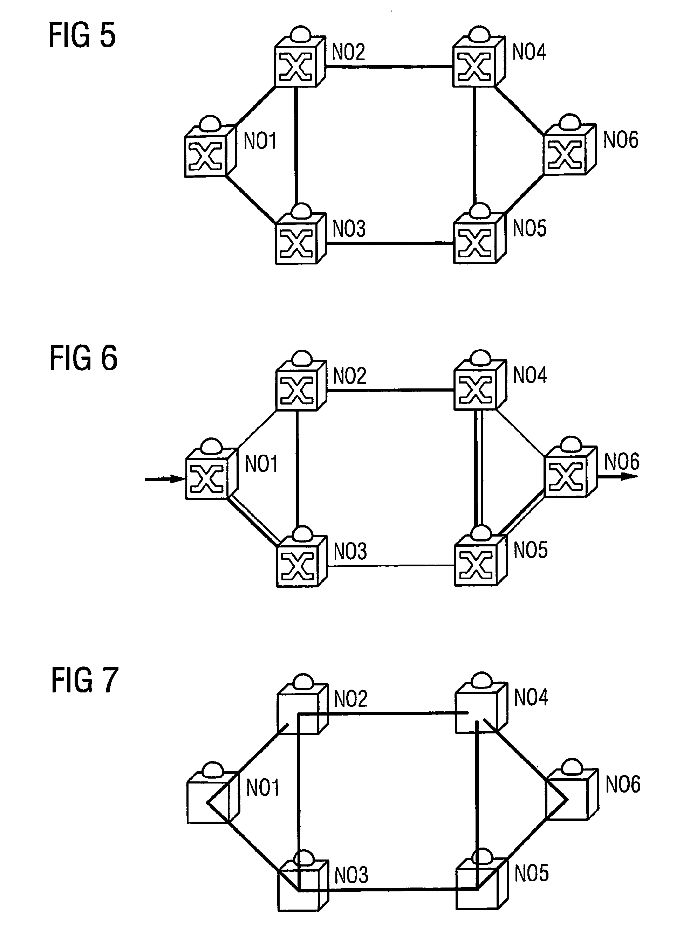

Figur 5 zeigt ein OBS-Netz, umfassend sechs Netzknoten N01, N02, N03, N04, N05, N06, wobei Netzknoten N01 mit Netzknoten N02 und N03 verbunden ist; Netzknoten N02 mit Netzknoten N03 und N04 verbunden ist; Netzknoten N03 mit Netzknoten N05 verbunden ist, Netzknoten N04 mit Netzknoten N05 und N06 verbunden ist; Netzknoten NO5 mit Netzknoten N06 verbunden ist. Die Verbindung erfolgt bspw. mittels Lichtwellenleiter.

Figur 6 zeigt das OBS-Netz gemäß Figur 5 mit einem ersten verschalteten schleifenfreien gemeinsamen Steuerungskanal. Dieser ist von Netzknoten N01 über Netzknoten N03, Netzknoten N02, Netzknoten N04, Netzknoten N05 zu Netzknoten N06 eingerichtet und durch eine breite dunkle Linie in Figur 6 eingezeichnet. Dabei ist auf einer Verbindung zwischen zwei Netzknoten jeweils ein Kanal für den gemeinsamen Steuerungskanal vorgesehen, allerdings nicht in jedem Fall im Netzknoten verschaltet, beispielsweise gemäß Figur 6 bei den Verbindungen von Netzknoten NO1 zu Netzknoten N02 bzw. von Netzknoten N03 zu Netzknoten N05 oder von Netzknoten N04 zu Netzknoten N06.

Figur 7 zeigt ein OBS-Netz gemäß Figur 5 mit einem zweiten verschalteten schleifenfreien gemeinsamen Steuerungskanal, wobei hierbei zwei oder mehrere Zweige des gemeinsamen Steuerungskanals an einem Netzknoten enden, wobei diese jeweils terminiert werden, um Schleifen zu vermeiden. Der gemeinsamen Steuerungskanal ist von Netzknoten N01 zu Netzknoten N02 eingerichtet und wird hier terminiert, von Netzknoten N01 zu Netzknoten N03 und von hier einerseits zu Netzknoten N02 und Netzknoten N04; und andererseits zu Netzknoten NO5, von wiederum ein erster Zweig zu Netzknoten N04 und ein zweiter Zweig zu Netzknoten N06 und von diesem zu Netzknoten N04 eingerichtet ist. Enden mehrere Zweige an einem Netzknoten bzw. wird ein Pfad an einem Netzknoten durchgeführt während ein anderer hier endet, wird der endende Pfad jeweils terminiert, so dass keine Schleifen entstehen.

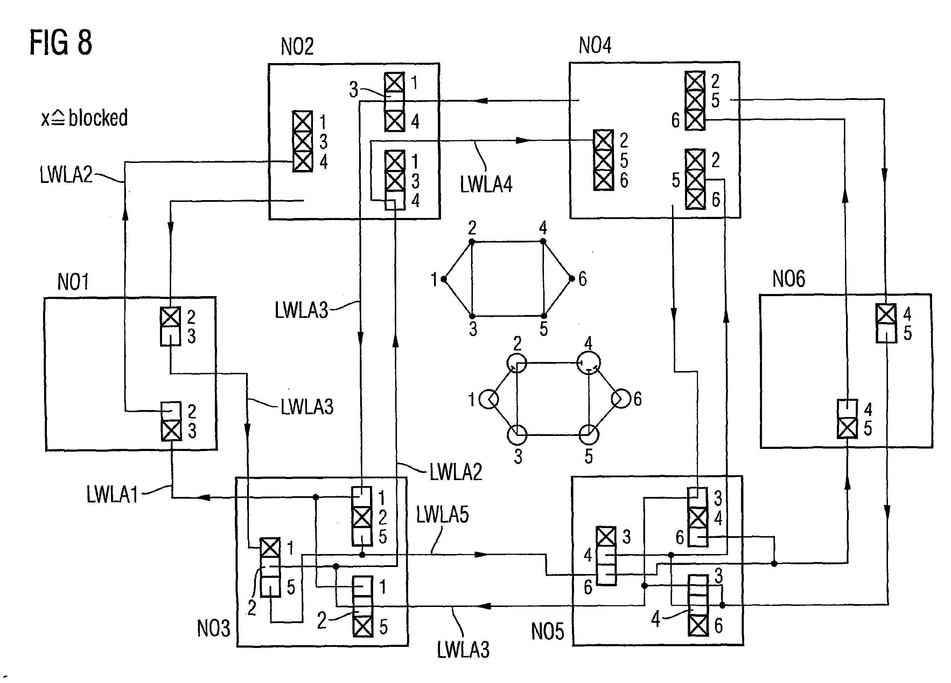

Figur 8 zeigt eine Verschaltung von Kanälen für einen schleifenfreien Steuerungskanal gemäß Figur 7 unter Verwendung von Netzelementen nach Figur 4. Durch Kästchen sind die jeweiligen Gruppen optischer Schalteinrichtungen OSGEA angedeutet. Ein Kreuz im entsprechenden Kästchen bedeutet, dass der Kanal des mit der Nummer bezeichnenten Netzknoten blockiert ist, d.h. nicht durchgeschaltet wird. Ein "freies" Kästchen bedeutet eine Durchschaltung.

## Patentansprüche

1. Verfahren zur Übertragung von Datenpaketen mittels eines mehrere Netzknoten (NO1, N02, N03, N04, NO5, N06) aufweisenden optischen Burst-Switching-Netzwerkes, in dem Datenpakete zu Bursts aggregiert werden, denen jeweils ein Header zugeordnet wird, wobei in dem optischen Burst-Switching-Netzwerk ein schleifenfreier gemeinsamer Steuerungskanal eingerichtet wird, zu dem alle Netzknoten Zugriff haben, **dadurch gekennzeichnet, dass** die Header über den schleifenfreien gemeinsamen Steuerungskanal quasi parallel an alle Netzknoten (N01, N02, N03, N04, N05, N06) übertragen und in den Netzknoten verarbeitet werden, wobei jeder Netzknoten einen Header empfängt und diesen optisch-elektrisch gewandelt einer Steuerung (SE) des Netzknotens zuführt, und wobei die Header für die Übertragung an alle Netzknoten über den eingerichteten gemeinsamen Steuerungskanal direkt von den jeweiligen Netzknoten weitergesendet werden.

2. Verfahren nach Anspruch 1, **dadurch gekennzeichnet, dass** bei Inbetriebnahme des optischen Burst-Switching-Netzwerkes ein schleifenfreier gemeinsamer Steuerungskanal eingerichtet wird.

3. Verfahren nach Patentanspruch 2, **dadurch gekennzeichnet, dass** mittels eines SPANNING-TREE-Verfahrens ein schleifenfreier gemeinsamer Steuerungskanal eingerichtet wird.

4. Verfahren nach einem der vorhergehenden Ansprüche, **dadurch gekennzeichnet, dass** die Netzknoten des optischen Burst-Switching-Netzwerkes durch Lichtwellenleiter miteinander verbunden werden und ein Wellenlängenmultiplexverfahren verwendet wird, dass ein optischer Wellenlängemultiplex-Kanal als gemeinsamer Steuerungskanal für die Übertragung von Headern verwendet wird.

**5.** Netzknoten für ein optisches Burst-Switching-Netzwerk, umfassend Mittel zur Durchführung des Verfahrens nach einem der Ansprüche 1 bis 4.

**6.** Netzknoten nach Patentanspruch 5, **dadurch gekennzeichnet, dass** der Netzknoten derart ausgestaltet ist, dass ein von einem Netzknoten empfangener Header einerseits direkt weitergesendet wird und andererseits optisch-elektrisch gewandelt einer Steuerung des Netzknotens zugeführt wird.

**7.** Netzknoten nach Anspruch 5 oder 6, **dadurch gekennzeichnet,**
**dass** die Netzknoten durch Lichtwellenleiter miteinander verbunden sind,
**dass** Bursts mittels Wellenlängenmultiplex in optischen Kanälen des Lichtwellenleiters übertragbar sind,
**dass** ein optischer Wellenlängenmultiplex-Kanal des Lichtwellenleiters als gemeinsamer Steuerungskanal für Header vorgesehen ist.

**8.** Netzknoten nach Anspruch 7 **dadurch gekennzeichnet, dass** ein eingangsseitiger Lichtwellenleiter (LWLE1, LWLE2, ... LWLEM) mit einem Demultiplexer (1, 2, ..., M) verbunden ist, der den für den gemeinsamer Steuerungskanal vorgesehenen Wellenlängenmultiplex-Kanal auskoppelt und einem optischen Splitter (SP1, SP2, ..., SPM) zuführt, der einerseits mit einem optisch-elektrischen Umsetzer (O/E) verbunden ist, der wiederum mit einer Steuerung (SE) des Netzknoten verbunden ist, und andererseits mit einer optischen Schalteinrichtung (OSGEA) verbunden ist, dessen Ausgang mit einem optischen Combiner (CZ1, CZ2, ... CZM) verbunden ist, der andererseits mit einem elektrisch-optischen Umsetzer (E/O) verbunden ist, der mit der Steuerung (SE) verbunden ist, und der Ausgang des optischen Combiners (CZ1, CZ2, ... CZM) mit einem Multiplexer (1', 2', ..., M') verbunden ist, der den gemeinsamen Steuerungskanal in einen Kanal eines ausgangsseitigen Lichtwellenleiter (LWLA1, LWLA2, ..., LWLAM) einkoppelt.

## Claims

**1.** A method for transmission of data packets by means of an optical burst switching network featuring a number of network nodes (N01, N02, N03, N04, N05, N06) in which data packets are aggregated into a burst to which a header is assigned,
wherein
a loop-free common control channel is set up in the optical burst switching network, to which all network nodes have access, **characterized in that**
the headers are transmitted over the loop-free common control channel virtually in parallel to all network nodes (N01, N02, N03, N04, N05, N06) and processed virtually in parallel in the network node, wherein each network node receives a header and conveys said header opto-electrically converted to a control unit (SE) of the network node, and wherein the headers are forwarded directly from the corresponding network node via the set up control channel for transmission to all network nodes.

**2.** The method as claimed in claim 1,
**characterized in that**
when the optical burst switching network is commissioned, a loop-free common control channel is set up.

**3.** The method as claimed in claim 2,
**characterized in that**
a loop-free common control channel is set up by means of a SPANNING TREE procedure.

**4.** The method as claimed in one of the previous claims.
**characterized in that**
the network nodes of the optical burst switching network are connected to each other by optical fibers and a wavelength division multiplexing method is used,
an optical wavelength division multiplex channel is used as common control channel for the transmission of headers.

**5.** A network node for an optical burst switching network, comprising means for carrying out the method as claimed in one of the claims 1 to 4.

**6.** The network node as claimed in claim 5,
**characterized in that**

the network node is embodied such that a header received by a network node is on the one hand forwarded directly and on the other hand is fed opto-electrically converted to a controller of the network node.

7. The network node as claimed in claim 5 or 6,
   **characterized in that**
   the network nodes are connected to each other by optical fibers,
   bursts are transmitted by means of wavelength division multiplexing in optical channels of the optical fiber,
   an optical wavelength division multiplex channel of the optical fiber is provided as the common control channel for headers.

8. The network node as claimed in claim 7
   **characterized in that**
   an input-side optical fiber (LWLE1, LWLE2, ... LWLEM) is connected to a demultiplexer (1, 2, ..., M), which decouples the wavelength division multiplex channel provided for the common control channel and feeds it to an optical splitter (SP1, SP2, ..., SPM), which is connected on one side to an opto-electrical converter (O/E) which in its turn is connected to a controller (SE) of the network node and on the other side to an optical switching device (OSGEA) of which the output is connected to an optical combiner (CZ1, CZ2, ... CZM), which is connected on the other side to an electro-optical converter (E/O) which is connected to the controller (SE) and the output of the optical combiner (CZ1, CZ2, ... CZM) is connected to a multiplexer (1', 2', ..., M') which couples the common control channel into a channel of an output-side optical fiber (LWLA1, LWLA2, ..., LWLAM).

## Revendications

1. Procédé pour la transmission de paquets de données au moyen d'un réseau à commutation optique de rafales, comportant plusieurs noeuds de réseau (N01, N02, N03, N04, N05, N06), dans lequel les paquets de données sont agrégés en rafales, auxquelles est associé respectivement un en-tête (header), un canal de commande commun sans boucle, auquel peuvent accéder tous les noeuds de réseau, étant mis en place dans le réseau à commutation optique de rafales, **caractérisé en ce que** les en-têtes sont transmis via le canal de commande commun sans boucle quasiment parallèlement vers tous les noeuds de réseau (N01, N02, N03, N04, N05, N06) et sont traités dans les noeuds de réseau, chaque noeud de réseau recevant un en-tête et achemine celui-ci, sous forme transformée par voie optique-électrique, vers une commande (SE) du noeud de réseau, et les en-têtes, en vue de leur transmission vers tous les noeuds de réseau, étant transmis directement par les noeuds de réseau respectifs via le canal de commande commun mis en place.

2. Procédé selon la revendication 1, **caractérisé en ce qu'**au moment de la mise en service du réseau à commutation optique de rafales, un canal de commande commun sans boucle est mis en place.

3. Procédé selon la revendication 2, **caractérisé en ce qu'**un canal de commande commun sans boucle est mis en place au moyen d'un procédé STP (ou procédé de l'arbre recouvrant).

4. Procédé selon l'une quelconque des revendications précédentes, **caractérisé en ce que** les noeuds du réseau à commutation optique de rafales sont reliés entre eux par des guides d'ondes optiques, et un procédé de multiplexage en longueurs d'ondes est utilisé, **en ce qu'**un canal optique de multiplexage en longueurs d'ondes est utilisé en tant que canal de commande commun pour la transmission des en-têtes.

5. Noeud de réseau pour un réseau à commutation optique de rafales, comportant des moyens permettant la mise en oeuvre du procédé selon l'une des revendications 1 à 4.

6. Noeud de réseau selon la revendication 5, **caractérisé en ce que** le noeud de réseau est configuré de telle sorte qu'un en-tête reçu par le noeud de réseau est, d'une part, directement transmis et, d'autre part, est acheminé sous forme transformée par voie optique-électrique vers une commande du noeud de réseau.

7. Noeud de réseau selon la revendication 5 ou 6, **caractérisé en ce que** les noeuds de réseau sont reliés entre eux par des guides d'ondes optiques, **en ce que** des rafales peuvent être transmises au moyen du multiplexage en longueurs d'ondes dans des canaux optiques du guide d'ondes optiques, **en ce qu'**un canal optique de multiplexage en longueurs d'ondes du guide d'ondes optiques est prévu en tant que canal de commande commun pour les en-têtes.

**8.** Noeud de réseau selon la revendication 7, **caractérisé en ce qu'**un guide d'ondes optiques du côté entrée (LWLE1, LWLE2, ... LWLEM) est relié à un démultiplexeur (1, 2, ... M), qui découple le canal de multiplexage en longueurs d'ondes prévu pour le canal de commande commun et le mène vers un éclateur optique (SP1, SP2, ... SPM) qui est relié, d'une part, à un convertisseur optique-électrique (O/E) relié lui-même à une commande (SE) du noeud de réseau, et qui est relié, d'autre part, à un dispositif de commutation optique (OSGEA), dont la sortie est reliée à un mélangeur optique (CZ1, CZ2, ... CZM), qui est relié, d'autre part, à un convertisseur électrique-optique (E/O) qui est relié à la commande (SE), et la sortie du mélangeur optique (CZ1, CZ2, ... CZM) est reliée à un multiplexeur (1', 2', ..., M') qui couple le canal de commande commun dans un canal d'un guide d'ondes optique du côté sortie (LWLA1, LWLA2, ... LWLAM).

# FIG 1

Edge node issues Header

NK A    NK B    NK C    NK D    NK E

Time

$T_{Setup}$

$T_{OXC}$

$T_{Setup}$

Optical Cross Connect is configured

$T_{OXC}$

$T_{Setup}$

$T_{Idle}$

Edge node receives Header

Edge node issues Burst

$T_{Idle}$

$T_{OXC}$

$T_{Idle}$

Optical Burst

Edge node receives Burst

EP 1 834 503 B1

# FIG 2

NK A   NK B   NK C   NK D   NK E

Edge node issues Header

Edge node receives Header

$T_{Setup}$   $T_{Setup}$   $T_{Setup}$

Time

$T_{OXC}$   $T_{OXC}$   $T_{OXC}$

Optical Cross Connect is configured

$T_{Idle}$   $T_{Idle}$   $T_{Idle}$

Edge node issues Burst

Optical Burst

Edge node receives Burst

EP 1 834 503 B1

FIG 3

Optical
Multiplexer

Optical
Demultiplexer

OpticalSwitch

Optical Coupler (Adder)

Optical Coupler (Splitter)

FIG 4

Optical
Multiplexer

Optical
Demultiplexer

OpticalSwitch

Optical Coupler (Adder)

Optical Coupler (Splitter)

FIG 5

FIG 6

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004107798 A